# FASCICULE DE BREVET EUROPEEN

(11) **EP 0 323 922 B1**
(45) Date de publication et mention de la délivrance du brevet: **21.04.1993**
(21) Numéro de dépôt: 89400005.8
(22) Date de dépôt: 03.01.1989
(51) Int. Cl.: B60C 27/02

(54) **Ensemble à chaîne pour pneumatiques**
Kettenglied für Reifen
Chain element for a pneumatic tyre

(30) Priorité: 04.01.1988 FR 8800001
(43) Date de publication de la demande: 12.07.1989
(73) Titulaire: ETS CABLAC, F-25250 Lisle sur le Doubs (FR)
(72) Inventeur: Hugues-Dissile, Philippe, F-39300 Champagnole (FR)
(74) Mandataire: Debay, Yves

(56) Documents cités:
- FR-A- 1 156 009
- GB-A- 339 524
- US-A- 2 014 151
- US-A- 2 591 241

## Description

La présente invention concerne un ensemble à chaînes pour pneumatiques, notamment à bracelets.

Il est connu par le document US-A-2 014 151 un ensemble à chaînes pour pneumatiques contenant des bracelets constitués de deux supports d'écartement reliés entre eux par des chaînes, une sangle solidaire du premier support et un tendeur de sangle rendu solidaire du second support. Toutefois ce dispositif de tendeur étant un tendeur dont la force de tension est réalisée par la traction sur la sangle elle-même, ne permet pas de s'adapter sur les pneumatiques de poids lourds ou de gros véhicule qui nécessitent des tensions relativement importantes pour assurer un bon mantien.

Il est connu des dispositifs de chaînage pour pneumatiques, en particulier pour camion ou véhicule lourd, nécessitant des opérations de mise en place longues et difficiles. La difficulté d'obtenir une tension correcte des chaînes sur le pneumatique après la pose de celles-ci est un autre inconvénient des dispositifs de chaînage connus .

Un dispositif permettant d'assurer une bonne tension est constitué par la demande de brevet français FR-A-1 156 009, qui enseigne un tendeur de sangle avec mécanisme à cliquet. Cet ensemble à chaînes comporte à une extrémité des chaînes une sangle et à l'autre extrémité un tendeur à cliquet. Le système à cliquet de ce tendeur est actionné par levier amovible pénétrant dans un orifice de l'axe du cliquet. Un tel dispositif présente l'inconvénient de nécessiter l'utilisation d'une tige que l'on doit ranger dans le véhicule. Ceci est une source de possibilité d'égarement du levier. D'autre part, pour pouvoir actionner le dispositif, il est nécessaire de faire effectuer au levier un demi-tour complet pour pouvoir le changer de position. Ceci n'est pas toujours possible dans les véhicules, compte-tenu de la place disponible autour du pneumatique.

Par ailleurs, le cliquet étant exposé à l'extérieur du dispositif, la projection d'un caillou peut déverrouiller le cliquet et déclencher l'ouverture de la chaîne.

L'invention a donc pour premier but de proposer un ensemble à chaînes permettant par une pose facile et rapide d'obtenir la tension souhaitée sur les chaînes.

Ce but est atteint par le fait que l'ensemble à chaînes comprend des bracelets constitués de deux supports d'écartement reliés entre eux par des chaînes, une sangle solidaire de façon démontable ou non du premier support et un tendeur de sangle solidaire de façon démontable ou non du deuxième support, caractérisé en ce que le tendeur est à double cliquet et comporte un cliquet d'entraînement solidaire du levier du tendeur et un cliquet de verrouillage solidaire de la partie du tendeur solidaire du support, ledit cliquet d'entraînement entraînant en rotation au moins une roue dentée solidaire de l'axe du tendeur pourvu d'une fente, ledit axe constituant également l'axe de pivotement du levier du tendeur, ledits cliquets d'entraînement et de verrouillage étant sollicités par des moyens élastiques vers l'axe.

Un autre but de l'invention est de proposer un ensemble à chaînes permettant de s'adapter à toutes les dimensions de pneumatiques.

Ce but est atteint par le fait que dans l'ensemble à chaînes, les chaînes sont reliées de façon amovible et règlable aux deux supports.

Un autre but de l'invention est de permettre un démontage facile des chaînes.

Ce but est atteint par le fait que le tendeur comporte des moyens de déverrouillage du cliquet.

Selon une autre caractéristique, les chaînes sont reliées par des mousquetons ou des manilles au support.

Selon une caractéristique supplémentaire, le point d'une extrémité d'un support est relié, par une chaîne diagonale, au point de l'extrémité du second support opposé situé dans la diagonale .

Selon une caractéristique supplémentaire de l'invention, la sangle est renforcée.
Selon une autre caractéristique, le cliquet d'entraînement comporte des moyens formant poignée pour permettre par action sur ces moyens la rotation du levier du tendeur sans provoquer l'entraînement de l'axe du tendeur.

Selon une autre caractéristique, les moyens de verrouillage du cliquet de verrouillage sont constitués par une came solidaire du levier du tendeur et disposée de façon que le cliquet de verrouillage soit retiré de la denture de la roue dentée lorsque le levier du tendeur se trouve en position ouverte dans le prolongement du support.

Selon une autre caractéristique, le levier est relié par une entretoise à un deuxième levier pour former une poignée.

Un autre but de l'invention est de proposer un tendeur dont le système à cliquet soit protégé et évite un relâchement intempestif de la tension sur les chaînes.

Ce but est atteint par le fait que les leviers comportent des ergots de verrouillage du cliquet de verrouillage lorsque le tendeur est en position fermée.

Selon une autre caractéristique, le tendeur comporte deux roues dentées et les leviers sont montés de part et d'autre des roues dentées.

D'autres caractéristiques et avantages de l'invention apparaîtront plus clairement à la lecture de la description ci-après faite en référence aux dessins annexés dans lesquels :
- la figure 1 représente l'ensemble à chaînes monté sur une roue de véhicule ;
- la figure 2 un bracelet de chaînage conforme à un premier mode de réalisation de l'invention ;
- la figure 3A une vue détaillée du tendeur à double cliquet monté sur un support de chaînage ;
- la figure 3B un deuxième mode de réalisation du chaînage de chaque bracelet.

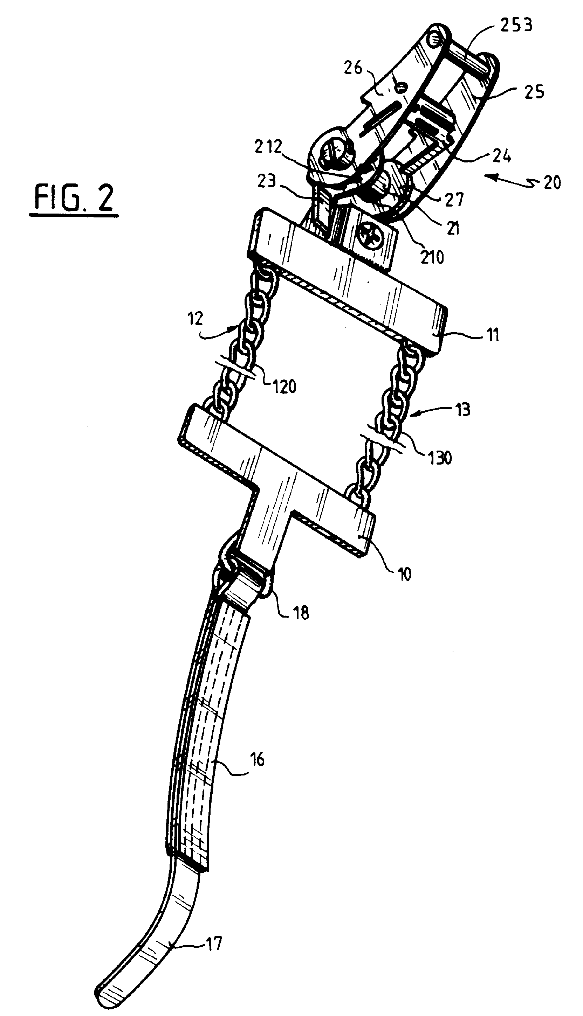

Un mode de réalisation d'un bracelet de chaînage est représenté à la figure 2. Ce bracelet est constitué de deux supports d'écartement (10,11), substantiellement en forme de T et reliés entre eux par deux tronçons de chaîne (12,13) soudés aux extrémités des parties transversales des pièces en T de façon que lorsque les chaînes sont tendues, elles soient espacées l'une de l'autre d'une distance correspondant substantiellement à la dimension de la barre transversale du T. La partie centrale du premier support (10) comporte à son extrémité un anneau (18) solidaire de façon démontable ou non de cette partie centrale, sur cet anneau (18) est montée une sangle (17) comportant au moins une pièce de renfort (16) pour éviter une usure prématurée de la sangle.

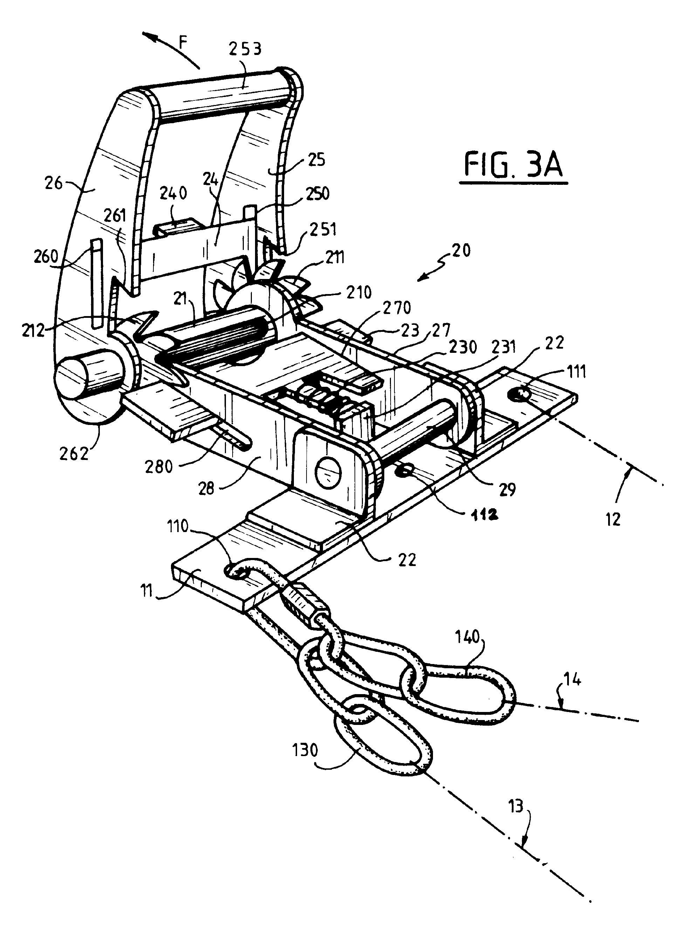

Le deuxième support (11) comporte, rapporté de façon démontable ou non sur sa partie centrale, un tendeur à cliquet (20) dont la constitution va être explicitée en liaison avec la figure 3A. Ce tendeur à cliquet (20) est constitué d'une entretoise (29) et de deux pièces latérales (27,28) rendues solidaires par deux équerres (22) du deuxième support (11). Ces deux pièces (27,28) comportent chacune une découpe (270), respectivement (280) dans laquelle coulisse une pièce mobile (23) constituant un cliquet de verrouillage. Cette pièce mobile (23) est solicitée en permanence en direction de l'axe (21) du tendeur par un ressort (230) appuyant sur, d'une part la pièce (23), d'autre part une languette (231) solidaire du support (11) ou de la partie fixe du tendeur (27,28). L'axe du tendeur est constitué par un tambour (21) pourvu d'une fente (210) de dimension suffisante pour permettre le passage de la sangle (17), ce tambour (21) est monté de façon à pivoter librement dans les plaques latérales (27,28), de chaque côté des plaques (27,28) et solidaires en rotation du tambour (21) se trouvent des roues dentées (212,211) constituant avec la pièce (23) un système à cliquet. De part et d'autre des roues dentées (212, 211) sont montés libres en rotation par rapport à l'axe (21) des leviers (25,26) constituant avec une entretoise (253) une manette d'actionnement du tendeur. Les leviers (25,26) comportent respectivement des découpes (250, 260) dans lesquelles coulisse une pièce (24) rappelée par des moyens élastiques en direction des roues dentées (211,212) et constituant un cliquet d'entraînement rendant solidaire en rotation, dans le sens anti-horaire, la poignée (25,253,26) et le tambour denté (21,211,212). Cette pièce (24) comporte une languette (240) constituant une deuxième poignée permettant de désengager le cliquet des roues dentées (211,212) pour permettre la rotation de la première poignée (25,253,26) sans entraîner le tambour (21).

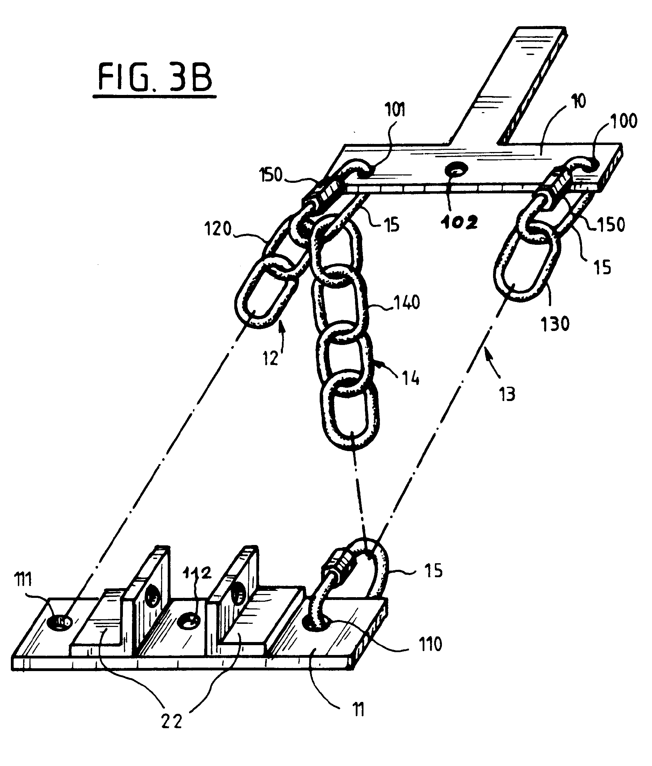

Sur la figure 3A et 3B on peut voir un deuxième mode d'exécution de l'invention dans lequel les éléments de chaîne transversaux (12,13) sont complètés par un élément de chaîne diagonale (14) qui relie une des extrémités du support (par exemple 101) à l'extrémité du support opposé située dans la diagonale (par exemple 110). Dans cette variante, les éléments de chaîne sont reliés au support par des mousquetons ou manilles (15) montés dans des trous (100,101) respectivement (110,111) placés à proximité des extrémités des supports (10), respectivement (11). Ces manilles permettent , grâce aux écrous (150), de venir modifier la distance séparant les deux éléments supports (11,10) en changeant le nombre de maillons (120,130,140) de chaîne utilisés pour relier les deux supports (10,11). Dans les deux variantes, les chaînes (12,13,14) sont de longueur suffisante pour, lorsqu'elles sont disposées en travers de la bande de roulement, permettre aux supports (10,11) d'être situé sur les flancs du pneu.

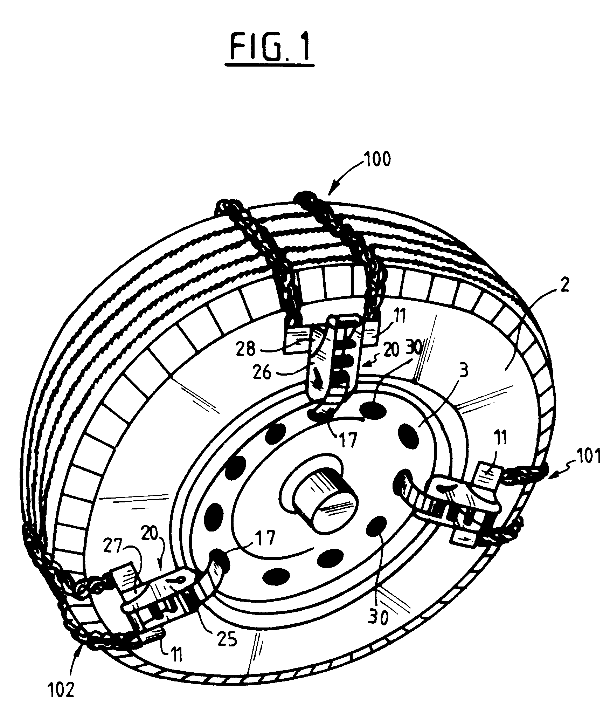

La mise en place des bracelets de chaînage va être explicitée en liaison avec la figure 1 et la figure 3A. Comme représenté à la figure 1, le bracelet de chaînage est disposé sur le pneumatique de façon que les chaînes reposent sur la bande de roulement et que le tendeur à cliquet soit situé sur la partie latérale du pneumatique orientée vers l'extérieur du véhicule. Ensuite la sangle (17) qui est située derrière la roue est passée dans les orifices (30) de la jante (3) de la roue du véhicule et pour venir enfiler l'extrémité (17) de cette sangle dans la fente (210) du tambour tendeur (21). Ensuite, en actionnant le levier (25,26) par l'intermédiaire de la poignée (253) alternativement dans le sens de la flèche (F) et dans le sens opposé, on provoque la rotation du tambour (21) de façon à tendre la sangle et les chaînes (12,13) sur le pneumatique. Lorsque la poignée (253,26,25) est actionnée dans le sens de la flèche (F) le cliquet (24) engrène avec les roues dentées (211,212) entraîne le tambour (21) en rotation dans le même sens et provoque l'enroulement de la sangle rendue solidaire en rotation du tambour par l'introduction dans la fente (210). Lorsque la poignée (253) est ramenée en direction du support (11), le cliquet (24) s'escamote et le cliquet (23) de verrouillage empêche les roues dentées (211,212) de suivre le mouvement de la poignée (253) dans le sens inverse de la flèche (F). Le tambour (21) est ainsi empêché de tourner, ce qui maintient l'enroulement de la sangle sur le tambour et crée progressivement la tension de la sangle. Lorsque la tension souhaitée est obtenue les chaînes sont solidement tendues en travers de la bande de roulement et les plaques support (10,11) se trouvent de part et d'autre de celle-ci, la poignée (253) est rabattue en direction du support (11) de façon que les plaques (25,26) du levier encadrent les plaques (27,28). Lorsque le tendeur est dans sa position fermée représentée à la figure 1, les ergots (251, 261) des plaques (26,25) empêchent la plaque (23) constituant le cliquet de verrouillage d'être déverrouillée de façon intempestive pour éviter un relâchement intempestif de la tension de sangle. Chaque bracelet (100,101,102) est mis successivement en place de la façon indiquée ci-dessus. Comme on peut le comprendre la mise en place du dispositif est rapide est permet d'assurer une tension efficace. Par ailleurs, dans le deuxième mode de réalisation le dispositif permet un règlage de la longueur des chaînes et par conséquent d'adapter chaque bracelet à la dimension des pneumatiques. Enfin un tel dispositif permet d'adapter le nombre de bracelets que l'on veut monter sur un pneumatique, ceci en fonction des circonstances rencontrées. Ainsi, dans certains cas, un seul bracelet peut suffire à désembourber un véhicule. D'autre part le démontage du dispositif est encore plus rapide que le montage grâce à une forme de came (262, 252) solidaire des extrémités des leviers (26,25) pivotant sur le tambour (21). En effet, pour démonter le bracelet, il suffit, à partir de la position fermée du tendeur représenté à la figure 1, de saisir la poignée (25,253,26) en tirant sur la languette (240) pour désengager le cliquet (24) des roues dentées (211,212) et permettre le pivotement libre de la poignée (25,253,26) sans provoquer la rotation du tambour (21). Le pivotement dans le sens de la flèche (F) de la figure 2 se poursuit jusqu'à ouverture complète du tendeur. Cette ouverture complète correspond à la position représentée à la figure 2, position dans laquelle la poignée (25,253,26) se trouve substantiellement dans le prolongement des plaques fixes (27,28). Dans cette position on constate que la came (262) et (252) des leviers respectifs (26,25) constituant la poignée vient repousser la pièce (23) constituant le cliquet de verrouillage du tambour tendeur (21). La pièce (23) étant repoussée, les dents (211,212) ne sont plus retenue en rotation par cette pièce (23) et le tambour est libre de pivoter, pour permettre de détendre la sangle (17) et de démonter le bracelet.

Il est bien évident que le tendeur à cliquet pourrait éventuellement, dans une version simplifiée, comporter un seul cliquet de verrouillage (23) et un seul levier tendeur constitué par une barre cylindrique par exemple que l'on introduit dans un ou plusieurs trous perpendiculaires à l'axe du tambour (21) pour entraîner celui-ci en rotation.

Une autre variante peut être constituée par un tendeur à double cliquet dont le cliquet d'entraînement (24) est monté pivotant sur un levier (25) unique.

Les chaînes (12, 13) peuvent être constituées de chaîne à maillons torsadés ou de chaîne à maillons à fil carré.

De plus, une troisième chaîne peut remplacer la chaine en biais (14) qui figure entre les deux chaînes (12, 13) et relier l'orifice (112, figure 3B) situé au milieu de la plaque (11) à son homologue (102) sur la plaque (10).

Toute autre modification à la portée de l'homme de métier fait également partie de l'esprit de l'invention.

## Revendications

1. Ensemble à chaînes pour pneumatique comprenant des bracelets constitués de deux supports d'écartement (10,11) reliés entre eux par des chaînes (12,13,14), une sangle (17) solidaire de façon démontable ou non du premier support et un tendeur (20) de sangle solidaire de façon démontable ou non du deuxième support caractérisé en ce que le tendeur (20) est à double cliquet et comporte un cliquet d'entraînement (24) solidaire du levier (26) du tendeur et un cliquet de verrouillage (23) solidaire de la partie (28) du tendeur solidaire du support (11), ledit cliquet d'entraînement (24) entraînant en rotation au moins une roue dentée (211, 212) solidaire de l'axe (21) du tendeur pourvu d'une fente (210), ledit axe (21) constituant également l'axe de pivotement du levier (26) du tendeur, ledits cliquets d'entraînement (24) et de verrouillage (23) étant sollicités par des moyens élastiques (230) vers l'axe (21).

2. Ensemble à chaînes selon la revendication 1, caractérisé en ce que les chaînes sont reliées de façon amovible et règlable aux deux supports.

3. Ensemble à chaînes selon la revendication 1 ou 2, caractérisé en ce que le tendeur comporte des moyens de déverrouillage du cliquet.

4. Ensemble selon la revendication 2 ou 3 caractérisé en ce que les chaînes (12,13) sont reliées par des mousquetons ou manilles (15).

5. Ensemble selon une des revendications 1 à 4, caractérisé en ce que le point (110) d'une extrémité d'un support (11) est relié, par une chaîne diagonale (14), au point (101) de l'extrémité du support (10)opposé situé dans la diagonale .

6. Ensemble selon la revendication 1 ou 5, caractérisé en ce que la sangle (17) comporte un renfort (16).

7. Ensemble selon la revendication 1 ou 6, caractérisé en ce que le cliquet d'entraînement (24) comporte des moyens (240) formant poignée pour permettre par action sur ces moyens la rotation du levier (26) du tendeur sans provoquer l'entraînement de l'axe (21) du tendeur.

8. Ensemble selon la revendication 7, caractérisé en ce que les moyens de déverrouillage du cliquet de verrouillage (23) sont constitués par une came (262) solidaire du levier (26) du tendeur et disposée de façon que le cliquet de verrouillage (23) soit retiré de la denture (212) de la roue lorsque le levier (26) du tendeur se trouve en position ouverte dans le prolongement du support (11).

9. Ensemble selon la revendication 8, caractérisé en ce que le levier (26) est relié par une entretoise (253) à un deuxième levier (25) pour former une poignée.

10. Ensemble selon la revendication 8, caractérisé en ce qu'au moins un levier (26,25) comporte un ergot (261,251) de verrouillage du cliquet de verrouillage (23) lorsque le tendeur est en position fermée.

11. Ensemble selon la revendication 9, caractérisé en ce qu'il comporte deux roues dentées (211, 212) et que les leviers (25, 26) sont montés de part et d'autre de ces roues dentées (211, 212).

## Patentansprüche

1. Kettensatz für Fahrzeugreifen aus zwei untereinander durch Ketten (12, 13, 14) verbundenen Abstandhaltern (10, 11), einem Gurt (17), das abnehmbar oder fest mit der einen Halterung verbunden ist, sowie einem Gurtspanner (20), der abnehmbar oder fest mit der zweiten Halterung verbunden ist, dadurch gekennzeichnet, daß der Gurtpanner (20) eine doppelte Rücklaufsperre besitzt, nämlich eine Spann-Rücklaufsperre (24), die fest mit dem Hebel (26) des Gurtspanners verbunden ist, und eine Verriegerungsperre (23), die fest mit dem Teil (28) des Gurtspanners verbunden ist, das seinerseits fest mit der Halterung (11) verbunden ist, wobei die Anzugssperre (24) mindestens ein Zahnrad (211, 212) weiterdreht, das fest mit der mit einer Nute (210) versehenen Achse (21) des Gurtspanners verbunden ist und diese Achse (21) gleichzeitig auch die Schwenkachse des Hebels (26) des Gurtspanners bildet, sodaß die Spann-Rücklaufsperre (24) und die Verriegelungssperre (23) durch elastische Mittel (230) zur Ache (21) hin beansprucht werden.

2. Kettensatz nach Patentanspruch 1, dadurch gekennzeichnet, daß die Ketten abnehmbar und verstellbar mit den beiden Halterungen verbunden sind.

3. Kettensatz nach Patentanspruch 1 oder 2, dadurch gekennzeichnet, daß der Gurtspanner Mittel zum Entriegeln der Rücklaufsperre besitzt.

4. Kettensatz nach Patentanspruch 2 oder 3, dadurch gekennzeichnet, daß die Ketten (12,13) durch Schnappringe oder Schäkel (15) befestigt sind.

5. Kettensatz nach einem der Patentansprüche 1 bis 4, dadurch gekennzeichnet, daß der eine Endpunkt (110) einer Halterung (11) mit dem diagonal gegenüberliegenden Endpunkt (101) der anderen Halterung (10) durch eine diagonal verlaufende Kette (14) verbunden ist.

6. Kettensatz nach Patentanspruch 1 oder 5, dadurch gekennzeichnet, daß der Gurt (17) eine Verstärkung (16) besitzt.

7. Kettensatz nach Patentanspruch 1 oder 6, dadurch gekennzeichnet, daß die Spann-Rücklaufsperre (24) einen handgriff bildende Mittel (240) besitzt, durch deren Betätigung der Hebel (26) des Gurtspanners in Drehung versetzt werden kann, ohne eine Drehung der Achse (21) des Gurtspanners zu bewirken.

8. Kettensatz nach Patentanspruch 7, dadurch gekennzeichnet, daß die Mittel zur Entriegelung der Verriegelungssperre (23) aus einer Nocke (262) bestehen, die fest mit dem Hebel des Gurtspanners verbunden und derart angebracht ist, daß die verriegelungssperre (23) aus der Zahnung des Zahnrades entfernt wird, wenn der Hebel (26) des Gurtspanners in die geöffnete Stellung in Verlängerung der Halterung (11) verlagert wird.

9. Kettensatz nach Patentanspruch 8, dadurch gekennzeichnet, daß der Hebel (26) durch eine Abstandshülse (253) mit einem zweiten Hebel (25) verbunden ist, sodaß dadurch ein Griff gebildet wird.

10. Kettensatz nach Patentanspruch 8, dadurch gekennzeichnet, daß mindestens ein Hebel (26, 25) einen Vorsprung (261, 251) zum Einrasten der Verriegelungssperre (23) besitzt, wenn der Hebel in die geschlossene Stellung verlagert wird.

11. Kettensatz nach Patentanspruch 9, dadurch gekennzeichnet, daß er zwei Zahnräder (211, 212) besitzt und die Hebel (25, 26) links und rechts dieser Zahnräder (211, 212) angebracht sind.

## Claims

1. Pneumatic chain unit including metal bands made up of two spacing supports (10,11) interconnected by chains (12,13,14), a belt (17), possibly detachable, integral with the first support, and a belt stretcher (20), possibly detachable, integral with the second support, wherein the stretcher (20) has a double catch and comprises one driving catch (24) integral with the lever (26) of the stretcher and one locking catch (23) integral with the portion (28) of the stretcher integral with the support (11), said driving catch (24) driving in rotation at least one toothed wheel (211, 212) integral with the pin (21) of the stretcher provided with an aperture (210), said pin (21) also constituting the swivel pin of the lever (26) of the stretcher, said driving (24) and locking (23) catches being stressed by elastic means (230) towards the pin (21).

2. Chain unit according to claim 1, wherein the chains are connected to the two supports and are movable and adjustable.

3. Chain unit according to claim 1 or 2, wherein the stretcher comprises means for unlocking the catch.

4. Unit according to claim 2 or 3, wherein the chains are connected by trigger snaps or coupling links (15).

5. Unit according to any one of claims 1 to 4, wherein the point (110) of one extremity of a support (11) is connected by a diagonal chain (14) to the point (101) of the extremity of the opening support (10) situated diagonally.

6. Unit according to claim 1 or 5, wherein the belt (17) comprises a reinforcement piece (16).

7. Unit according to claim 1 or 6, wherein the driving catch (24) comprises means (240) forming a handle so as to allow for action on these means of rotation of the lever (26) of the stretcher without driving the pin (21) of the stretcher.

8. Unit according to claim 7, wherein the means for unlocking the locking catch (23) are made up of a cam (262) integral with the lever (26) of the stretcher and disposed in such a way that the locking catch (23) is removed from the tooth (212) of the wheel when the lever (26) of the stretcher is situated in an open position in the elongation of the support (11).

9. Unit according to claim 8, wherein the lever (26) is connected by a brace (253) to a second lever (25) so as to form a handle.

10. Unit according to claim 8, wherein at least one lever (26, 25) comprises a snug (261, 251) for locking the locking catch (23) when the stretcher is in its closed position.

11. Unit according to claim 9, wherein it comprises two toothed wheels (211, 212) and wherein the levers (25, 26) are mounted on both sides of these toothed wheels (211, 212).
